# EUROPÄISCHE PATENTSCHRIFT

(11) **EP 4 632 348 B1**
(45) Veröffentlichungstag und Bekanntmachung des Hinweises auf die Patenterteilung: **02.12.2026**
(21) Anmeldenummer: 24168977.7
(22) Anmeldetag: 08.04.2024
(51) Int. Cl.: G01N 3/14, H01M 6/50, H01M 10/42

(54) **ELEKTROCHEMISCHE TESTZELLE**
ELECTROCHEMICAL TEST CELL
CELLULE D'ESSAI ÉLECTROCHIMIQUE

(43) Veröffentlichungstag der Anmeldung: 15.10.2025
(73) Patentinhaber: El-Cell GmbH, 21079 Hamburg (DE)
(72) Erfinder: Pfeifer, Lucas, 21075 Hamburg (DE); Hahn, Matthias, 30890 Barsinghausen/Kirchdorf (DE); Hahn, Michael, 22880 Wedel (DE)
(74) Vertreter: Müller Verweyen

(56) Entgegenhaltungen:
- WO-A1-2018/060281
- WO-A1-2023/217838
- US-A1- 2017 016 844
- HAHN: "User Manual PAT-Cell-Force", 1 October 2023 (2023-10-01), pages 1 - 17, XP093209656, Retrieved from the Internet <URL:https://www.el-cell.com/products/test-cells/force-test-cells/pat-cell-force/#1687864830013-767be9f6-b3a2> [retrieved on 20240927]

## Beschreibung

Die vorliegende Erfindung betrifft eine elektrochemische Testzelle, umfassend einen Sockel mit einer Aufnahme für einen Prüfling, eine mit dem Sockel gas- und flüssigkeitsdicht verschließbare Deckelanordnung zum Abdichten eines den Prüfling enthaltenden Prüfraums, ein Federjoch mit einem Federmantel, der im Kraftweg zwischen dem Sockel und dem Prüfling angeordnet ist und auf den Prüfling wirkt, und mit einer Stirnwand; und einen Kraftsensor zum Messen der im Kraftweg wirkenden Kraft.

Die Messung von Dickenänderungen bzw. Dilatation in einem Batteriestapel während der Zyklisierung ist von entscheidender Bedeutung für die Charakterisierung der chemomechanischen Eigenschaften von Batteriematerialien. Dafür sind unterschiedliche Vorrichtungen bereits kommerziell erhältlich, siehe beispielsweise das Datenblatt "ECD4-Nano. Advanced test cell for the measurement of electrode expansion with nanometer resolution", EL-Cell, Dezember 2023. Im weiteren Stand der Technik offenbart das Dokument "User Manual - PAT-Cell-Force - Electrochemical test cell", Release 1.0, EL-Cell, 2023 eine Testzelle, um die auf einen Zellstapel ausgeübte mechanische Kraft einzustellen und zu messen.

Ein weiteres Thema von großem Interesse ist das Zyklisieren von Batterien unter der Einwirkung eines zuvor eingestellten Druckes im Bereich von einigen Kilopascal bis zu hunderten von Megapascal. Vor diesem Hintergrund ist die Messung der Dilatation unter Druck von Interesse.

Zusätzlich ermöglicht es der Kraftsensor, die Kraft während der Zyklisierung zu messen. Während der Zyklisierung werden periodische Schwankungen im Kraftsignal beobachtet, die mit der Zellspannung korreliert sind. Diese Kraftschwankungen lassen sich auf Dickenänderungen der aktiven Materialien der Batterie zurückführen.

Der Erfindung liegt die Aufgabe zugrunde, eine Testzelle bereitzustellen, die eine hochgenaue Messung der dynamischen Dickenänderungen des Prüflings beispielsweise während einer Testmessung ermöglicht.

Die Erfindung löst diese Aufgabe mit den Merkmalen der unabhängigen Patentansprüche.

Erfindungsgemäß ist zur Erzeugung von Elastizität mindestens ein Schlitz, eine Nut, Ausnehmung, Bohrung und/oder Öffnung in den Federmantel eingebracht.

Der erfindungsgemäße Federmantel weist eine hochgenau bekannte und reproduzierbare Kennlinie auf, die eine wesentlich genauere Bestimmung der Dickenänderung des Prüflings erlaubt als herkömmliche Federelemente beispielsweise auf der Grundlage von Tellerfedern. Erfindungsgemäß kann die Dickenänderung aus der beobachteten Kraftamplitude bei bekannter Federkennlinie, die etwa durch Kalibrierung bestimmt werden kann, ermittelt werden. Im Falle einer linearen Federkennlinie kann das Hooke'sche Gesetz angewendet werden, jedoch ist die Erfindung nicht auf einen Federmantel mit linearer Kennlinie beschränkt.

Der erfindungsgemäße Federmantel zeichnet sich durch eine hochgenau bekannte und reproduzierbare Federkennlinie aus. Zudem ist die Federkonstante des Federmantels viel geringer als alle Federkonstanten in den übrigen Bauteilen der Testzelle. Somit ist der erfindungsgemäße Federmantel näherungsweise allein bestimmend für die Flexibilität bzw. Elastizität des gesamten Kraftwegs, die Federkonstanten der anderen Bauteile können vernachlässigt werden. Unter diesen Bedingungen kann die Dickenänderung des Prüflings Δd direkt aus der Kraftänderung ΔF berechnet werden. Dieses Theorem wurde experimentell bestätigt.

Der Kraftweg verläuft vom Sockel ausgehend U-förmig durch das Federjoch und über den Prüfling und den Drucksensor zurück in den Sockel. Das Federjoch weist folgende Komponenten auf, um den U-förmig verlaufenden Kraftweg zu realisieren: ein äußeres axialparalleles Kraftschlusselement, eine queraxiale Stirnwand und ein inneres axialparalleles Kraftschlusselement. Eines der axialparallelen Kraftschlusselemente wird von dem Federmantel gebildet und ist somit elastisch. Das andere axialparallele Kraftschlusselement ist starr und wird beispielsweise von der Kraftbeaufschlagungseinrichtung oder einem starren Jochteil gebildet.

In vorteilhaften Ausführungsformen wird das Federjoch durch ein äußeres, hutförmiges Element mit Federmantel und Stirnwand und eine innere Kraftbeaufschlagungseinrichtung gebildet. In anderen vorteilhaften Ausführungsformen wird das Federjoch durch ein äußeres hutförmiges Jochteil mit Stirnwand und einen inneren Federmantel gebildet.

Generell kann eine Kraftbeaufschlagungseinrichtung vorgesehen sein, oder auf eine Kraftbeaufschlagungseinrichtung verzichtet werden.

In einer bevorzugten Ausführungsform ist eine Mehrzahl von Schlitzen, Nuten, Ausnehmungen, Bohrungen und/oder Öffnungen in den Federmantel eingebracht. Die Schlitze/Nuten/Ausnehmungen/Bohrungen/Öffnungen sind vorzugsweise in einer oder mehreren Ebenen senkrecht zu einer Längsachse des Federmantels angeordnet. Im Falle von Nuten sind diese entlang der Längsachse vorteilhaft abwechselnd an der Innen- und an der Außenseite des Federmantels angeordnet (mäanderförmig im Längsschnitt). Besonders vorteilhaft sind Schlitze/Nuten paarweise in jeweils einer Ebene senkrecht zu der Längsachse des Federmantels angeordnet. Die Schlitze bzw. Nuten können kreisbogenförmig mit einer Winkelerstreckung im Bereich zwischen 90° und 270° sein. Bei einem nicht-kreisförmigen, etwa ovalem, elliptischen, rechteckigen oder n-eckigen Querschnitt des Federmantels können die Schlitze/Nuten anders geformt sein.

In einer anderen Ausführungsform ist mindestens ein schraubenförmig verlaufender Schlitz vorgesehen, der durchgehend sein kann, oder es kann eine Mehrzahl von jeweils schraubenförmig verlaufenden, versetzt zueinander angeordneten Schlitzen vorgesehen sein.

Vorzugsweise weist das Federjoch an dem der Stirnwand entgegengesetzten Ende ein oder mehrere Verbindungselemente zum Zusammenwirken mit entsprechenden Verbindungselementen an dem Sockel auf, bevorzugt in der Art eines Bajonettverschlusses.

In der Stirnwand des Federjochs ist vorzugsweise eine Durchgangsbohrung, beispielsweise zur Betätigung der Kraftbeaufschlagungseinrichtung, vorgesehen.

In vorteilhaften Ausführungsformen ist der Federmantel im montierten Zustand auf Zug belastet. In anderen vorteilhaften Ausführungsformen ist der Federmantel im montierten Zustand auf Druck belastet.

In einer ersten, konstruktiv einfachen Ausführungsform ist der Federmantel vorzugsweise innerhalb des Prüfraums, bzw. eines den Prüfraum gas- und flüssigkeitsdicht abdichtenden Innendeckels, angeordnet.

In einer weiteren Ausführungsform ist der Federmantel außerhalb des Prüfraums, bzw. eines den Prüfraum gas- und flüssigkeitsdicht abdichtenden Innendeckels, angeordnet. Dies hat den Vorteil, dass die durch das Kraftbeaufschlagungseinrichtung ausgeübte Kraft, beispielsweise während der Testmessung, geändert werden kann, ohne den durch den Innendeckel abgedichteten Prüfraum mit dem darin angeordneten Prüfling öffnen zu müssen. In dieser Ausführungsform kann vorzugsweise ein Balg zur Abdichtung des Prüfraums vorgesehen sein.

Vorzugsweise weist die Testzelle eine Kraftbeaufschlagungseinrichtung zum Beaufschlagen des Prüflings mit einer definierten und einstellbaren Kraft auf. In dem Federmantel ist vorzugsweise ein mit der Kraftbeaufschlagungseinrichtung zusammenwirkendes Gegenstück angeordnet ist, das sich von innen an der Stirnwand abstützt. Vorzugsweise ist in dem Federmantel ein zwischen der Kraftbeaufschlagungseinrichtung und dem Prüfling angeordneter Andruckstempel axial verschiebbar geführt. Die Kraftbeaufschlagungseinrichtung kann vorteilhaft ein insbesondere kugelförmiges Kraftübertragungselement aufweisen.

Die Erfindung betrifft des Weiteren ein Verfahren zur Herstellung eines Federmantels für eine vorbeschriebene Testzelle. Erfindungsgemäß wird ein Mantel (zunächst ohne Schlitz/Nut) vorgefertigt, und in einem nachfolgenden Schritt wird mindestens ein Schlitz, eine Nut, Ausnehmung, Bohrungen und/oder Öffnungen in den Mantel eingebracht, wodurch dieser zu einem Federmantel wird. Auf diese Weise ist der erfindungsgemäße Federmantel beispielsweise von einer Schraubenfeder abgegrenzt. Die Einbringung des mindestens einen Schlitzes, der mindestens einen Nut, Ausnehmung, Bohrungen und/oder Öffnungen in den Federmantel kann beispielsweise mittels eines spanabhebenden Verfahrens, etwa durch Fräsen, oder mittels eines Laserstrahls erfolgen.

Die Erfindung wird im Folgenden anhand bevorzugter Ausführungsformen unter Bezugnahme auf die beigefügten Figuren erläutert. Dabei zeigt
- Fig. 1: eine montierte Testzelle in einer Seitenansicht von außen;
- Fig. 2: eine Querschnittsansicht durch eine montierte Testzelle;
- Fig. 3: eine perspektivische Ansicht eines hutförmigen Elements mit Federmantel;
- Fig. 4: eine Draufsicht auf das hutförmige Element gemäß Fig. 3 von oben;
- Fig. 5, 7: Querschnittsansichten durch das hutförmige Element gemäß Fig. 4;
- Fig. 6, 8: seitliche Ansichten des hutförmigen Elements gemäß Fig. 4 von außen;
- Fig. 9: eine perspektivische Ansicht eines Federjochs;
- Fig. 10: eine perspektivische Ansicht eines hutförmigen Elements mit Federmantel in einer zweiten Ausführungs- form;
- Fig. 11: eine Draufsicht auf das hutförmige Element gemäß Fig. 10 von oben;
- Fig. 12,: 13 Querschnittsansichten durch das hutförmige Element gemäß Fig. 11;
- Fig. 14: eine perspektivische Ansicht eines hutförmigen Elements mit Federmantel in einer dritten Ausführungsform;
- Fig. 15: eine Draufsicht auf das hutförmige Element gemäß Fig. 14 von oben;
- Fig. 16,: 17 Querschnittsansichten durch das hutförmige Element gemäß Fig. 15;
- Fig. 18: eine Querschnittsansicht durch eine montierte Testzelle mit außen liegendem Federmantel;
- Fig. 19: eine perspektivische Ansicht einer ersten Ausführungsform eines außen liegenden Federmantels;
- Fig. 20: eine perspektivische Ansicht einer zweiten Ausführungsform eines außen liegenden Federmantels;
- Fig. 21: eine perspektivische Ansicht eines Federjochs zur definierten Kraftbeaufschlagung;
- Fig. 22: eine Querschnittsansicht durch eine montierte Testzelle mit dem Federjoch gemäß Fig. 21;
- Fig. 23: eine Draufsicht auf das Federjoch gemäß Fig. 21 von oben;
- Fig. 24, 25: Querschnittsansichten durch das Federjoch gemäß Fig. 21; und
- Fig. 26, 27: seitliche Ansichten des Federmantels gemäß Fig. 24, 25 von außen.

Die elektrochemische Testzelle 10 umfasst einen, vorzugsweise metallischen und/oder topfförmigen, Sockel 11 und eine Deckelanordnung 12, die ein Gehäuse 13 und einen Innendeckel 14 umfasst. Das Gehäuse 13 und somit die Deckelanordnung 12 sind mittels Verbindungselementen, beispielsweise einen Bajonettverschluss, mit dem Sockel 11 verbindbar.

Der Prüfling 50 wird von dem Sockel 11 gehalten und ist beispielsweise auf den Sockel 11 auflegbar oder in den Sockel 11 einsetzbar. Der Prüfling 50 kann eine elektrochemische Prüfzelle sein, die insbesondere einen Elektrodenstapel mit einer Arbeitselektrode, einer Gegenelektrode und einer Referenzelektrode aufweist, wobei die Referenzelektrode ein zu untersuchendes Referenzmaterial, beispielsweise metallisches Lithium, enthält oder damit in Kontakt steht. Der Prüfling 50 ist nicht auf eine elektrochemische Prüfzelle beschränkt.

In dem Sockel 11 ist eine abgedichtete elektrische Durchführung 15, beispielsweise zur elektrischen Kontaktierung des Prüflings 50 und Leitung zu einer elektrischen Schnittstelle, die beispielsweise in einem Boden 16 des Sockels 11 angeordnet sein kann, angeordnet.

Die Deckelanordnung 12 umfasst ein beispielsweise über eine Handhabe 18 zu betätigendes Schraubelement 19, hier in Form eines Schraubdeckels, durch den der Innendeckel 14 unter Komprimierung eines zwischen Innendeckel 14 und Sockel 11 vorgesehenen Dichtrings 20 auf den Sockel 11 gedrückt wird. Das Schraubelement 19 weist zu diesem Zweck ein Außengewinde 43 auf, das mit einem entsprechenden Innengewinde 44 in dem Gehäuse 13 zusammenwirkt. Der Dichtring 20 kann aus Metall, beispielsweise Aluminium, bestehen und/oder im Querschnitt L-förmig sein. Sockel 11, Innendeckel 14 und Dichtung 20 bilden somit ein gas- und flüssigkeitsdicht abgedichtetes Innengehäuse, durch welches ein den Prüfling 50 enthaltender Prüfraum 51 hermetisch bzw. gas- und flüssigkeitsdicht nach außen abgedichtet ist. Die funktionelle Trennung der Deckelanordnung 12 in ein Verbindungsteil in Form des Gehäuses 13 zum Verbinden der Deckelanordnung 12 mit dem Sockel 11 und ein Schraubelement 19 erlaubt die manuelle Erzeugung einer für die Abdichtung des Prüfraums 51 erforderlichen Dichtkraft mittels des Schraubelements 19. Es ist auch denkbar, die Abdichtkraft auf andere Weise zu erzeugen, beispielsweise elektrisch. Das Gehäuse 13 bildet in dieser Ausführungsform einen Außendeckel 40.

Über ein zwischen dem Innendeckel 14 und dem Prüfling 50 angeordnetes hutförmiges Element 22 wird der Prüfling 50 mit einer definierten und in manchen Ausführungsformen einstellbaren Kraft beaufschlagt. Das hutförmige Element 22 ist dabei Teil eines Federjochs 48, das ein äußeres axialparalleles Kraftschlusselement, eine queraxiale Stirnwand 24 und ein inneres axialparalleles Kraftschlusselement aufweist. Dies wird im Folgenden genauer erläutert.

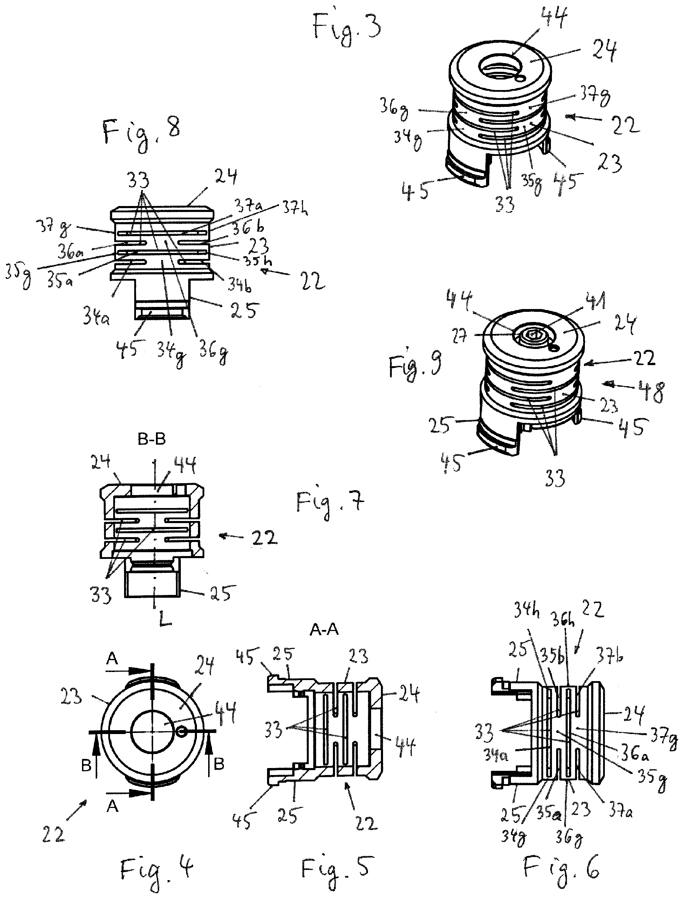

Eine erste Ausführungsform des hutförmigen Elements 22 und des Federjochs 48 ist in den Figuren 3 bis 9 gezeigt.

Das hutförmige Element 22 weist einen, beispielsweise zylindrischen, Federmantel 23 und eine Stirnwand 24 an einem axialen Ende des Federmantels 23 auf; am anderen axialen Ende des Federmantels 23 ist das hutförmige Element 22 offen. Die Stirnwand 24 ist vorteilhaft dem Prüfling 50 abgewandt angeordnet. Am offenen Ende weist das hutförmige Element 22 ein oder mehrere Verbindungselemente 25 auf, mit denen das hutförmige Element 22 so mit dem Sockel 11 verbindbar ist, dass im verbundenen Zustand das hutförmige Element 22 relativ zu dem Sockel 11 axial unverschiebbar ist, beispielsweise in der Art eines Bajonettverschlusses. Der Sockel 11 weist zu diesem Zweck ein oder mehrere entsprechende Verbindungselemente 26 auf, die zum Zusammenwirken mit den Verbindungselementen 25 des hutförmigen Elements 22, beispielsweise in der Art eines Bajonettverschlusses, eingerichtet sind. Das oder jedes Verbindungselement 25 weist zu diesem Zweck vorzugsweise mindestens einen oder mehrere, hier zwei, Vorsprünge 45 auf, wobei der oder jeder Vorsprung mit einer entsprechenden Hinterschneidung in dem Sockel 11 so zusammenwirkt, dass im verbundenen Zustand das hutförmige Element 22 relativ zu dem Sockel 11 axial unverschiebbar ist. Selbstverständlich ist auch die umgekehrte Anordnung möglich (Hinterschneidung im hutförmigen Element 22, Vorsprünge 45 im Sockel 11).

Um den Prüfling 50 mit einer definiert einstellbaren Kraft zu beaufschlagen, ist eine Kraftbeaufschlagungseinrichtung 27, hier in Form einer Krafteinstellschraube vorgesehen. Dies geschieht vorzugsweise durch Einwirkung der Kraftbeaufschlagungseinrichtung 27 auf einen Andruckstempel 28, der wiederum auf den Prüfling 50 wirkt, wobei zwischen dem Andruckstempel 28 und dem Prüfling 50 noch ein Kraftübertragungselement 30 vorgesehen sein kann. Am Schaftende der Kraftbeaufschlagungseinrichtung 27 kann ein Kraftübertragungselement 32, hier beispielsweise in Form einer Kugel, angeordnet sein, wenn es bevorzugt ist, dass die Kraftbeaufschlagungseinrichtung 27 nicht direkt auf den Andruckstempel 28 wirkt, sondern über das Kraftübertragungselement 32.

Die Kraftbeaufschlagungseinrichtung 27 mit einem Außengewinde 56 wirkt mit einem ein entsprechendes Innengewinde 46 aufweisenden Gegenstück 31 zusammen, das sich von innen an der Stirnwand 24 abstützt. Das Gegenstück 31 kann auch mit dem hutförmigen Element 22 einstückig gebildet sein, etwa wenn in der Stirnwand 24 eine Bohrung mit Innengewinde vorgesehen ist. Die Kraftbeaufschlagungseinrichtung 27 weist an ihrem Kopf einen Drehantrieb 41 auf, so dass mittels eines formschlüssig eingreifenden Werkzeugs die Kraftbeaufschlagungseinrichtung 27 verdreht werden kann. Die Stirnwand 24 des hutförmigen Elements 22 weist eine insbesondere zentrale Bohrung 44 auf, durch die das Werkzeug von außen geführt werden kann, siehe Fig. 9. Selbstverständlich ist auch eine elektrische Verstellung der Kraftbeaufschlagungseinrichtung 27 denkbar.

Zur Ausführung der Kraftbeaufschlagung wird zunächst das in Figur 9 gezeigte Federjoch 48 mit hutförmigem Element 22, Kraftbeaufschlagungseinrichtung 27, ggf. Andruckstempel 28, Gegenstück 31, Kraftübertragungselementen 30, 32 in den Sockel 11 eingesetzt und mit dieser beispielsweise durch Drehbewegung verbunden, so dass das Federjoch 48 relativ zu dem Sockel 11 axial unverschiebbar gehalten ist. Die somit erzeugte Einheit aus Sockel 11 und Federjoch 48 wird im Folgenden als vormontierte Einheit bezeichnet. Zur Krafteinstellung kann die vormontierte Einheit in eine nicht gezeigte Montagestation eingesetzt werden.

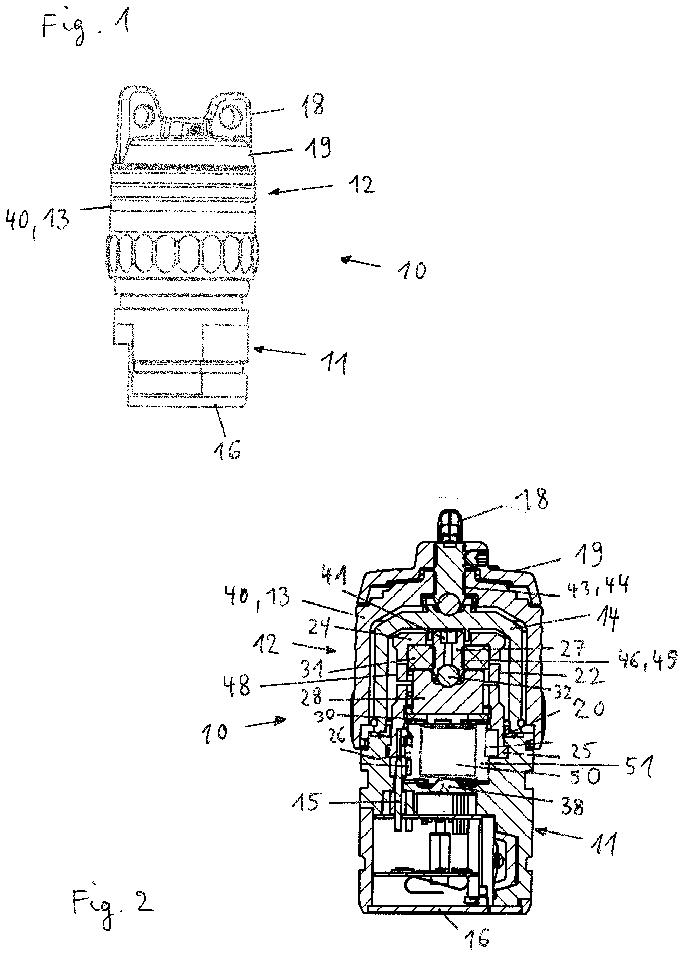

Zur eigentlichen Krafteinstellung wird die Kraftbeaufschlagungseinrichtung 27 mittels eines an dem Drehantrieb 41 angreifenden Werkzeugs in das hutförmige Element 22 hinein geschraubt. Infolge des Hineindrehens der Kraftbeaufschlagungseinrichtung 27 (Abwärtsbewegung in Fig. 2) wird eine entsprechende Gegenkraft auf das Gegenstück 31 ausgeübt, das sich folglich in die Gegenrichtung (nach oben in Fig. 2) bewegt und entsprechend die Stirnwand 24 ebenfalls in die Gegenrichtung drückt. Aufgrund der axialen Elastizität des Federmantels 23 wird das hutförmige Element 22 auseinandergezogen (Zugbelastung des hutförmigen Elements 22). Im Ergebnis entspricht die auf den Prüfling 50 ausgeübte Druckkraft genau der Rückstellkraft des Federmantels 23 bzw. des hutförmigen Elements 22.

Die Testzelle 10 weist einen Kraftsensor 38 auf, der angeordnet ist, um die durch Betätigung der Kraftbeaufschlagungseinrichtung 27 mittels des Federmantels 23 auf den Prüfling 50 ausgeübte Kraft zu messen. Der Kraftsensor 38 ist vorzugsweise an oder in dem Sockel 11 angeordnet. Es ist möglich, dass der Prüfling 50 kontaktierend an dem Kraftsensor 38 anliegt. Der Kraftsensor 38 ist zweckmäßigerweise mit der elektrischen Schnittstelle der Testzelle 10 bzw. des Sockels 11 elektrisch verbunden.

Nach dem Einsetzen der Testzelle 10 in eine nicht gezeigte Montagestation kann das Signal von dem Kraftsensor 38 über die elektrische Schnittstelle in der Montagestation verarbeitet und beispielsweise auf einem Display angezeigt werden. Ein Bediener kann beispielsweise die Kraftbeaufschlagungseinrichtung 27 drehen, bis der auf dem Display angezeigte Messwert des Kraftsensors 38 einen gewünschten Sollwert erreicht. Auch eine automatische Einstellung des gewünschten Kraftwerts mittels eines gesteuerten oder geregelten Elektroantriebs für die Kraftbeaufschlagungseinrichtung 27 ist denkbar.

Selbstverständlich kann die Krafteinstellung auch ohne Halterung der vormontierten Einheit in einer Montagestation erfolgen. Es ist zur Krafteinstellung grundsätzlich ausreichend, die elektrische Schnittstelle der Testzelle 10 mit einer Auswerteeinrichtung zu verbinden, welche zum Auslesen des von dem Kraftsensors 38 gemessenen Messwerts und beispielsweise Anzeige desselben auf einem Display oder Übermittlung an eine separate Datenverarbeitungseinrichtung eingerichtet ist. Diese Auswerteeinrichtung ist also vorzugsweise, aber nicht notwendig in einer Montagestation verwirklicht.

Die axiale Elastizität des Federmantels 23 wird durch einen oder mehrere in den Federmantel 23 eingebrachte Schlitze 33 oder Nuten erzeugt. Im Folgenden wird generell von durchgehenden Schlitzen 33 ausgegangen. Statt eines durchgehenden Schlitzes 33 kann jedoch in jedem Fall ein nicht durchgehender Schlitz, also eine Nut, vorgesehen sein; die Ausführung als Nut ist daher begrifflich mit umfasst, wenn von einem Schlitz 33 oder einer Gruppe von Schlitzen die Rede ist. Alternative Ausführungsformen betreffen in den Federmantel 23 eingebrachte Ausnehmungen, Öffnungen, Bohrungen und dergleichen.

In der Ausführungsform gemäß den Fig. 3 bis 9 handelt es sich um eine Mehrzahl, hier beispielsweise vier, axialparallel voneinander beabstandete Schlitzgruppen 34a, 34b; 35a, 35b; 36a, 36b; 37a, 37b. Die Anzahl der Schlitzgruppen kann kleiner oder größer als vier sein.

Jede Schlitzgruppe 34a, 34b (35a, 35b; 36a, 36b; 37a, 37b) ist in dieser Ausführungsform in einer Ebene parallel zu der Längsachse L (das ist die Federachse; siehe Figur 7) des Federmantels 23 angeordnet. Die Schlitzgruppen 34a, 34b, 35a, 35b; 36a, 36b; 37a, 37b sind axial voneinander beabstandet. Der wechselseitige Abstand kann wie hier konstant sein, oder variieren.

Jede Schlitzgruppe 34a, 34b (35a, 35b; 36a, 36b; 37a, 37b) umfasst eine oder vorzugsweise mehrere, beispielsweise zwei Schlitze 34a, 34b; 35a, 35b; 36a, 36b; 37a, 37b. Die Anzahl der Schlitze in jeder Schlitzgruppe kann größer als zwei sein.

Jeder Schlitz 34a, 34b; 35a, 35b; 36a, 36b; 37a, 37b ist beispielsweise kreisbogenförmig mit einer bevorzugten Winkelerstreckung im Bereich zwischen 90° und 180°, weiter vorzugsweise im Bereich zwischen 120° und 170°, noch weiter vorzugsweise im Bereich zwischen 140° und 170°. Aufgrund der Kreisbogenform ergeben sich Brücken 34g, 34h (35g, 35h; 36g, 36h; 37g, 37h) zwischen den Schlitze 34a, 34b; (35a, 35b; 36a, 36b; 37a, 37b) jeweils einer Schlitzgruppe, um die strukturelle Stabilität des Federelements 22 sicherzustellen. Der Federmantel 23 kann zylindrisch, insbesondere kreiszylindrisch, d.h. im Querschnitt kreisförmig sein, wie in den Figuren gezeigt, oder eine andere geschlossene Querschnittsform aufweisen, beispielsweise oval, elliptisch, viereckig, polygonal, etc.; bei Abweichung von der Kreisform ergeben sich andere Schlitzformen, d.h. die Schlitze 33 sind dann nicht kreisbogenförmig.

Die Schlitzgruppen sind vorzugsweise alternierend oder periodisch zueinander winkelversetzt angeordnet, vorteilhaft um einen ganzzahligen Bruchteil 1/k von 360°. Im vorliegenden Fall sind die Schlitzgruppen 34a, 34b; 35a, 35b; 36a, 36b; 37a, 37b alternierend um 90° zueinander versetzt angeordnet (k=4), siehe Fig. 3 und 9. Da jede Schlitzgruppe in sich gegenüber Drehung um 180° rotationssymmetrisch ist, wiederholt sich das Schlitzmuster (die Umfangsposition der Schlitze) in jeder zweiten Schlitzgruppe 34a, 34b; 36a, 36b bzw. 35a, 35b; 37a, 37b. Durch die zuvor beschriebene Anordnung der Schlitze 34a, 34b; 35a, 35b; 36a, 36b; 37a, 37b wird eine hochgradig reproduzierbare Kennlinie des Federmantels 23 erreicht.

Aufgrund der mittels der Kraftbeaufschlagungseinrichtung 27 eingestellten Druckkraft ergibt sich eine Reibschlussverbindung zwischen dem Sockel 11 und dem Federjoch 48. Zur Montage der Testzelle 10 wird die Deckelanordnung 12 auf die Einheit aus Sockel 11 und damit reibschlüssig verbundenem Federjoch 48 aufgesetzt, wobei dazwischen der Dichtring 20 angeordnet wird. Die Deckelanordnung 12 wird auf mit dem Sockel 11 über bereits erwähnte Verbindungselemente, beispielsweise einen Bajonettverschluss, verbunden. Die Dichtkraft wird vorteilhaft durch die Schraubbewegung des Schraubelements 19 erzeugt. Das Schraubelement 19 kann beispielsweise mittels eines an der Handhabe 18 ansetzenden Drehmomentschlüssels angezogen werden.

Der Federmantel 23 ist in dieser Ausführungsform vorzugsweise innerhalb des den Prüfraum 51 gas- und flüssigkeitsdicht abdichtenden Innendeckels 14 angeordnet.

Die fertig montierte Testzelle 10 ist in Fig. 1 gezeigt. Der insbesondere U-förmige Kraftweg verläuft über den Sockel 11, das hutförmige Element 22, die Kraftbeaufschlagungseinrichtung 27, den Prüfling 50 und den Kraftsensor 38 zurück in den Sockel 11. Daher bilden das hutförmige Element 22 und die Kraftbeaufschlagungseinrichtung 27 ein Federjoch 48 mit U-förmig verlaufendem Kraftweg.

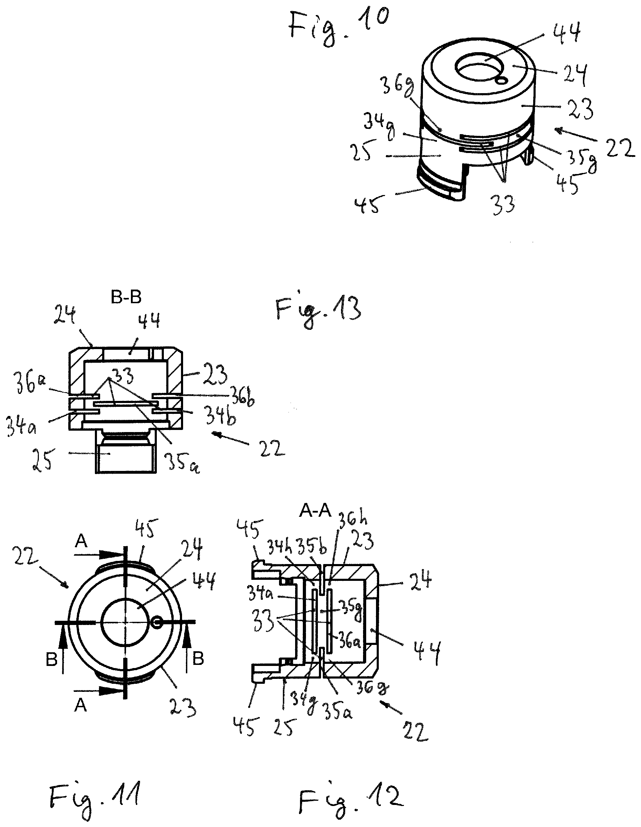

Das Federjoch 48 weist in dieser Ausführungsform folgende Komponenten auf: Das äußere axialparallele Kraftschlusselement des Federjochs 48 wird von dem Federmantel 23 gebildet. Die queraxiale Stirnwand 24 des Federjochs 48 wird von der Stirnwand 24 gebildet. Das innere axialparallele Kraftschlusselement des Federjochs 48 wird von der Kraftbeaufschlagungseinrichtung 27 gebildet. Gleiches gilt für die Ausführungsformen gemäß Fig. 10 bis Fig. 20.

Weil der Federmantel 23 in dem Kraftweg zwischen dem Sockel 11 und der Innenzelle 50 angeordnete ist, führt jede Dickenänderung des Prüflings 50 während der Testmessung zu einer Spannung bzw. Entspannung des Federmantels 23 und damit zu einer von dem Kraftsensor 38 messbaren Kraftänderung. Aufgrund der hochgenau bekannten und reproduzierbaren Federkennlinie des Federmantels 23 ergibt sich ein genau bekannter Zusammenhang zwischen der mit dem Kraftsensor 38 gemessenen Kraft und der Dickenänderung des Prüflings 50. Die Auswertung des mit dem Kraftsensor 38 gemessenen Kraftverlaufs über die Zeit erlaubt somit eine hochgenaue Bestimmung der Dickenänderung des Prüflings 50 über den Verlauf der Testmessung.

Im Falle einer elektrochemischen Prüfzelle 50 können über externe Anschlüsse in der elektrischen Schnittstelle für die Referenzelektrode, die Arbeitselektrode und die Gegenelektrode Lade- bzw. Entladekurven der elektrochemischen Testzelle 10 aufgenommen und/oder Impedanzmessungen durchgeführt werden.

Eine zweite Ausführungsform eines Federmantels 23 ist in den Figuren 10 bis 13 gezeigt. Diese Ausführungsform unterscheidet sich von derjenigen gemäß Fig. 3 bis 9 dahingehend, dass hier statt vier Schlitzpaaren bzw. Schlitzgruppen lediglich drei Schlitzpaare bzw. Schlitzgruppen 34a, 34b; 35a, 35b; 36a, 36b; vorgesehen sind, wobei dementsprechend Brücken 34g, 34h (35g, 35h; 36g, 36h) zwischen den Schlitze 34a, 34b; (35a, 35b; 36a, 36b) jeweils einer Schlitzgruppe gebildet sind. Auch die Winkelerstreckung der Schlitze 34a, 34b; (35a, 35b; 36a, 36b) ist etwas geringer als in der Ausführungsform gemäß Fig. 3 bis 9 und liegt beispielsweise im Bereich zwischen 90° und 150°.

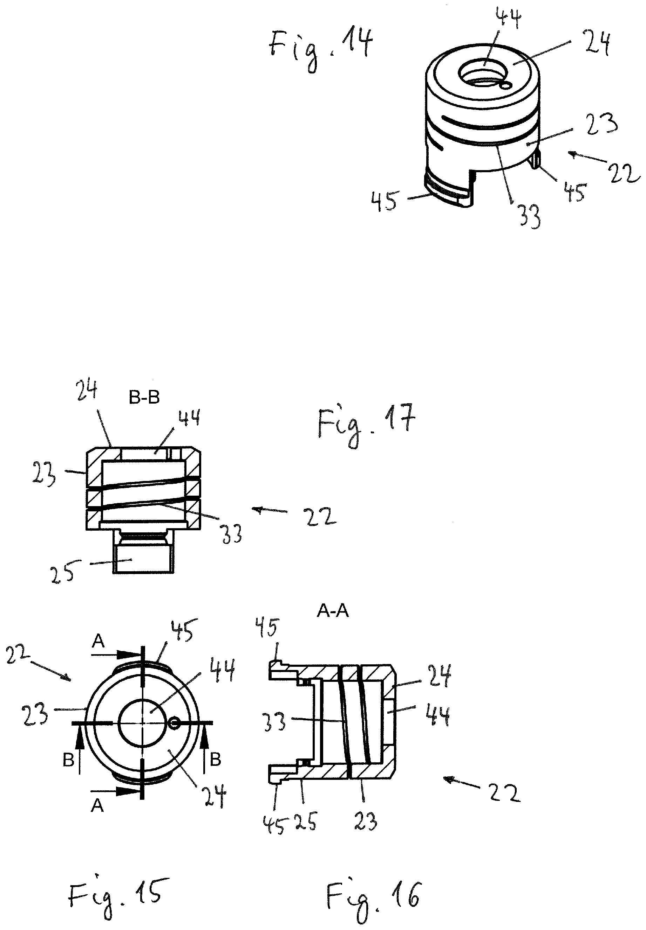

Eine dritte Ausführungsform eines Federmantels 23 ist in den Figuren 14 bis 17 gezeigt. Diese Ausführungsform unterscheidet sich von denjenigen gemäß Fig. 3 bis 13 dahingehend, dass hier ein durchgehender, schraubenförmig verlaufender Schlitz 33 in dem Federmantel 23 vorgesehen ist. Die Winkelerstreckung des schraubenförmigen Schlitzes 33 beträgt mindestens 180°, weiter vorzugsweise mindestens 360°, vorzugsweise mindestens 540°, hier beispielsweise etwa 720°.

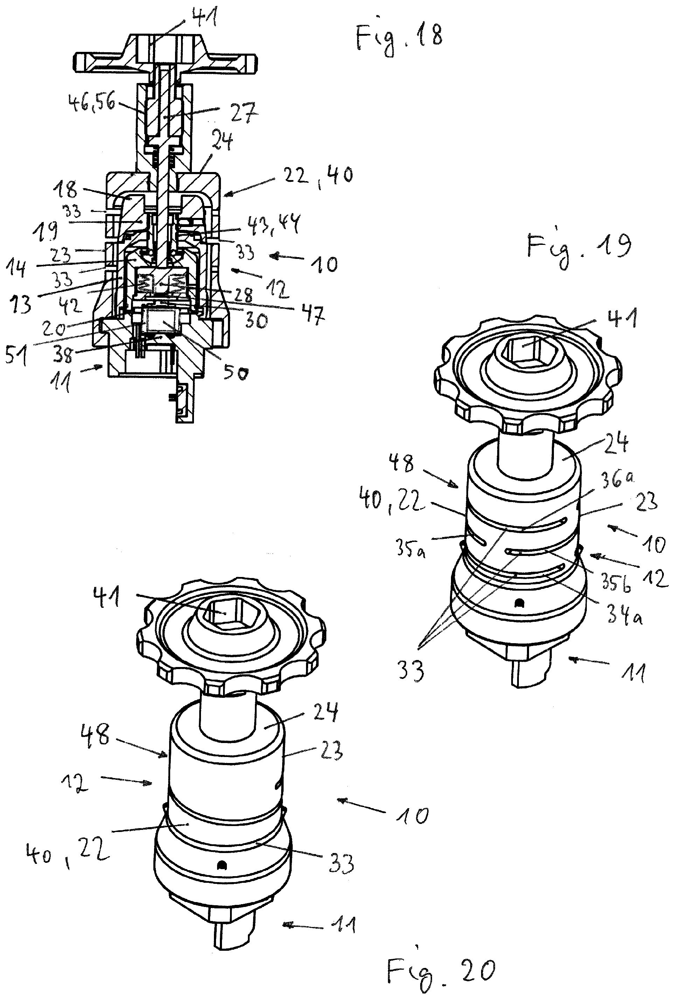

In einer anderen Ausführungsform, die in den Figuren 18 bis 20 gezeigt ist, ist der Federmantel 23 außerhalb des Innendeckels 14 und/oder außerhalb des Gehäuses 13 angeordnet und bildet somit einen Außendeckel 40. Die Kraftbeaufschlagungseinrichtung 27 durchgreift in dieser Ausführungsform das Gehäuse 13 und/oder den Innendeckel 14, wie in Fig. 18 ersichtlich. Zur Abdichtung des in dem Innendeckel 14 gebildeten Prüfraums 51 ist vorteilhaft ein Balg 42, beispielsweise ein Metallbalg, vorgesehen, der einerseits an dem Innendeckel 14 und andererseits beispielsweise an dem Andruckstempel 28 oder an der Kraftbeaufschlagungseinrichtung 27 befestigt ist.

Diese Ausführungsform hat den Vorteil, dass die durch das Kraftbeaufschlagungseinrichtung 27 ausgeübte Kraft geändert werden kann, ohne den durch den Innendeckel 14 abgedichteten Prüfraum mit dem darin angeordneten Prüfling 50 öffnen zu müssen, d.h. während eines Testzyklus.

Zwischen dem Andruckstempel 28 und dem Prüfling 50 bzw. einem auf den Prüfling 50 wirkenden Kraftübertragungselement 30 kann eine Feder 47 vorgesehen sein, die den Andruckstempel 28 in einer Ruheposition (ohne Kraftbeaufschlagung durch die Kraftbeaufschlagungseinrichtung 27) in einer von dem Prüfling 50 beabstandeten, in Figur 18 oberen, Ruheposition hält.

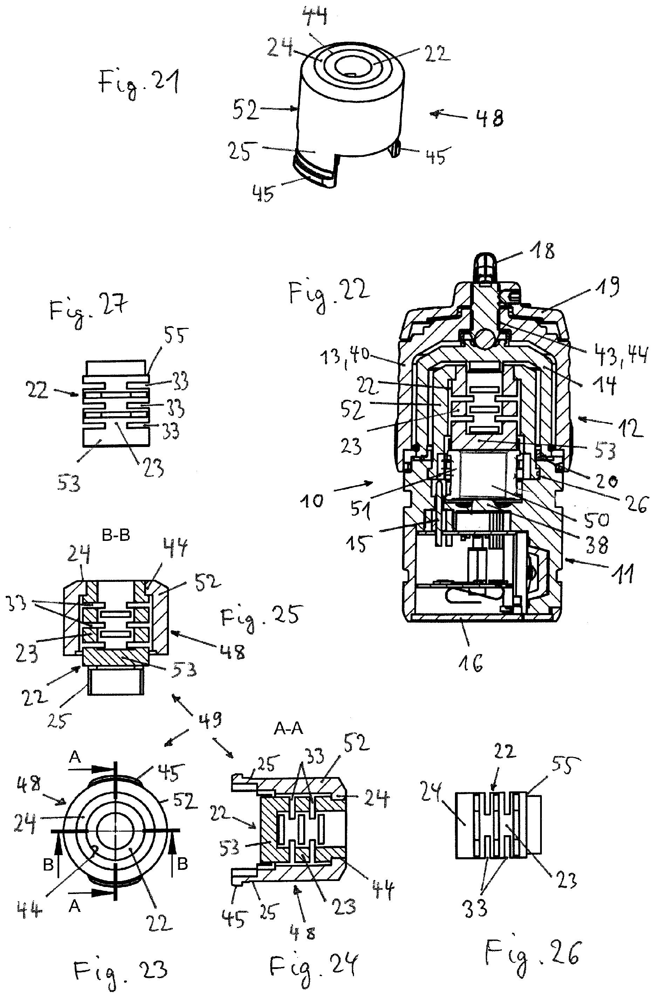

Eine weitere Ausführungsform eines Federjochs 48 und dessen Anordnung in einer Testzelle 10 ist in den Figuren 21 bis 27 gezeigt. Hier wird auf eine Kraftbeaufschlagungseinrichtung 27 verzichtet, so dass die durch den Federmantel 23 erzeugte Prüfkraft vordefiniert und nicht einstellbar ist, was einen besonders einfachen Aufbau ermöglicht.

In dieser Ausführungsform ist ein vorzugsweise hutförmiges Jochteil 52 vorgesehen, welches den Federmantel 23 an dessen Außenumfang umgibt, siehe Figuren 22, 24, 25. Die Stirnwand 24 des Federjochs 48 wird in dieser Ausführungsform von dem Jochteil 52 ausgebildet. Auch die Verbindungselemente 25 und/oder die Vorsprünge 45 des Federjochs 48 sind in diesem Fall an dem Jochteil 52 ausgebildet. Die Querschnittsform des Jochteils 52 entspricht vorzugsweise der Querschnittsform des Federmantels 23 und ist beispielsweise kreisförmig, so dass sich ein kreiszylindrisches Jochteil 52 ergibt. Das außenliegende Jochteil 52 mit Stirnwand 24 und der innenliegende Federmantel 23 bilden das Federjoch 48.

Der Federmantel 23 stützt sich vorteilhaft von innen an der Stirnwand 24 des Jochteils 52 ab. Zu diesem Zweck kann der Federmantel 23 an seinem mit der Stirnwand 24 zusammenwirkenden Ende vorteilhaft verjüngt sein und bildet einen beispielsweise ringförmigen Anschlag 55 aus, mit dem sich der Federmantel 23 an der Stirnwand 24 abstützt. In der Stirnwand 24 kann vorzugsweise eine Bohrung 44 vorgesehen sein, durch die ein axiales Ende des Federmantels 23 geführt ist, so dass die Bohrung 44 zur Führung und Positionsfixierung des Federmantels 23 dient. An dem dem Prüfling 50 zugewandten Ende des Federmantels 23 kann ein insbesondere plattenförmiger Andruckstempel 53 vorgesehen sein.

Das Federjoch 48 ist in dieser Ausführungsform so bemessen, dass im montierten Zustand der Abstand des Federmantels 23 vom Sockel 11 kleiner ist als die Ausdehnung des Prüflings 50, so dass der Federmantel 23 bei der Montage auf dem Prüfling 50 aufsitzt und dann der Federmantel 23 um eine vorbestimmte Länge komprimiert wird, was eine definierte Kraftausübung des Federmantels 23 auf den Prüfling 50 bewirkt. In dieser Ausführungsform wird demnach der Federmantel 23 im montierten Zustand auf Druck belastet.

Das Federjoch 48 weist in der Ausführungsform gemäß Fig. 21-27 folgende Komponenten auf: Das äußere axialparallele Kraftschlusselement des Federjochs 48 wird von dem Mantel des Jochteils 52 gebildet. Die queraxiale Stirnwand 24 des Federjochs 48 wird von der Stirnwand 24 des Jochteils 52 gebildet. Das innere axialparallele Kraftschlusselement des Federjochs 48 wird von dem Federmantel 23 gebildet.

Auch in dieser Ausführungsform erlaubt die Auswertung des mit dem Kraftsensor 38 gemessenen Kraftverlaufs über die Zeit eine hochgenaue Bestimmung der Dickenänderung des Prüflings 50 über den Verlauf der Testmessung.

In der Ausführungsform gemäß Fig. 21-27 sind die Schlitze 33 in dem Federmantel 23 in Ebenen parallel zu der Längsachse L des Federmantels 23 angeordnet. Es ist auch möglich, dass die Schlitze 33 stattdessen schraubenförmig verlaufen.

Es sind auch Ausführungsformen analog zu Fig. 21-27 mit innenliegendem Federmantel 23 und mit Kraftbeaufschlagungseinrichtung 27 etwa wie in Fig. 2 möglich.

### Bezugszeichenliste

- 10: Testzelle
- 11: Sockel
- 12: Deckelanordnung
- 13: Gehäuse
- 14: Innendeckel
- 15: elektrische Durchführung
- 16: Boden
- 18: Handhabe
- 19: Schraubelement
- 20: Dichtring
- 22: hutförmiges Element
- 23: Federmantel
- 24: Stirnwand
- 25, 26: Verbindungselement
- 27: Kraftbeaufschlagungseinrichtung
- 28: Andruckstempel
- 30, 32: Kraftübertragungselement
- 31: Gegenstück
- 33: Schlitz
- 34a-37b: Schlitzgruppen
- 34g-37h: Brücken
- 38: Kraftsensor
- 40: Außendeckel
- 41: Drehantrieb
- 42: Balg
- 43: Außengewinde
- 44: Bohrung
- 45: Vorsprung
- 46: Innengewinde
- 47: Feder
- 48: Federjoch
- 49: Außengewinde
- 50: Prüfling
- 51: Prüfraum
- 52: Jochteil
- 53: Andruckstempel
- 55: Anschlag
- 56: Außengewinde

## Patentansprüche

1. Elektrochemische Testzelle (10), umfassend:
- einen Sockel (11) und einen von dem Sockel (11) gehaltenen Prüfling (50);
- eine mit dem Sockel (11) gas- und flüssigkeitsdicht verschließbare Deckelanordnung (12) zum Abdichten eines den Prüfling (50) enthaltenden Prüfraums (51);
- ein Federjoch (48) mit einem Federmantel (23), der im Kraftweg zwischen dem Sockel (11) und dem Prüfling (50) angeordnet ist und auf den Prüfling (50) wirkt, und einer Stirnwand (24); und
- einen Kraftsensor (38) zum Messen der im Kraftweg wirkenden Kraft;
**dadurch gekennzeichnet, dass** zur Erzeugung von Elastizität mindestens ein Schlitz (33), eine Nut, Ausnehmung, Bohrung und/oder Öffnung in den Federmantel (23) eingebracht ist.

2. Elektrochemische Testzelle (10) nach Anspruch 1, **dadurch gekennzeichnet, dass** eine Mehrzahl von Schlitzen (33) Nuten, Ausnehmungen, Bohrungen und/oder Öffnungen in den Federmantel (23) eingebracht ist.

3. Elektrochemische Testzelle (10) nach Anspruch 2, **dadurch gekennzeichnet, dass** die Schlitze (33), Nuten, Ausnehmungen, Bohrungen und/oder Öffnungen in einer oder mehreren Ebenen senkrecht zu einer Längsachse des Mantels (23) angeordnet sind.

4. Elektrochemische Testzelle (10) nach Anspruch 1, **dadurch gekennzeichnet, dass** mindestens ein schraubenförmig verlaufender Schlitz (33) vorgesehen ist.

5. Elektrochemische Testzelle (10) nach einem der vorangehenden Ansprüche, **dadurch gekennzeichnet, dass** die Testzelle (10) eine Kraftbeaufschlagungseinrichtung (27) zum Beaufschlagen des Prüflings (50) mit einer definierten und einstellbaren Kraft aufweist.

6. Elektrochemische Testzelle (10) nach Anspruch 5, **dadurch gekennzeichnet, dass** in dem Federmantel (23) ein mit der Kraftbeaufschlagungseinrichtung (27) zusammenwirkendes Gegenstück (31) angeordnet ist, das sich von innen an der Stirnwand (24) des Federjochs (48) abstützt, und/oder dass in dem Federmantel (23) ein zwischen der Kraftbeaufschlagungseinrichtung (27) und dem Prüfling (50) angeordneter Andruckstempel (28) axial verschiebbar geführt ist.

7. Elektrochemische Testzelle (10) nach einem der vorangehenden Ansprüche, **dadurch gekennzeichnet, dass** der Federmantel (23) im montierten Zustand der Testzelle (10) auf Zug belastet ist.

8. Elektrochemische Testzelle (10) nach einem der Ansprüche 1 bis 7, **dadurch gekennzeichnet, dass** der Federmantel (23) im montierten Zustand der Testzelle (10) auf Druck belastet ist.

9. Elektrochemische Testzelle (10) nach einem der vorangehenden Ansprüche, **dadurch gekennzeichnet, dass** das Federjoch (48) an dem der Stirnwand (24) entgegengesetzten Ende ein oder mehrere Verbindungselemente (25) zu Zusammenwirken mit entsprechenden Verbindungselementen (26) an dem Sockel (11), vorzugsweise in der Art eines Bajonettverschlusses, aufweist.

10. Elektrochemische Testzelle (10) nach einem der vorangehenden Ansprüche, **dadurch gekennzeichnet, dass** in der Stirnwand (24) eine Durchgangsbohrung (44) vorgesehen ist.

11. Elektrochemische Testzelle (10) nach einem der vorangehenden Ansprüche, **dadurch gekennzeichnet, dass** der Federmantel (23) innerhalb des Prüfraums (51) angeordnet ist.

12. Elektrochemische Testzelle (10) nach einem der vorangehenden Ansprüche, **dadurch gekennzeichnet, dass** der Federmantel (23) außerhalb des Prüfraums (51) angeordnet ist.

13. Elektrochemische Testzelle (10) nach Anspruch 13, **dadurch gekennzeichnet, dass** zur Abdichtung des Prüfraums (51) ein Balg (42) vorgesehen ist.

14. Elektrochemische Testzelle (10) nach einem der vorangehenden Ansprüche, **dadurch gekennzeichnet, dass** das Federjoch (48) ein den Federmantel (23) außen umgebendes Jochteil (52) aufweist.

15. Elektrochemische Testzelle (10) nach einem der vorangehenden Ansprüche, **dadurch gekennzeichnet, dass** der Federmantel (23) und die Stirnwand (24) ein hutförmiges Element (22) bilden.

## Claims

1. Electrochemical test cell (10), comprising:
- a base (11) and a test specimen (50) held by the base (11);
- a lid arrangement (12), which can be sealed in a gas-tight and liquid-tight manner with the base (11), for sealing a test chamber (51) containing the test specimen (50);
- a spring yoke (48) with a spring mantle (23), which is arranged in the force path between the base (11) and the test specimen (50) and which acts on the test specimen (50), and an end wall (24); and
- a force sensor (38) for measuring the force acting in the force path;
**characterized in that,** to generate elasticity, at least one slot (33), groove, recess, passage and/or opening is introduced in the spring mantle (23).

2. Electrochemical test cell (10) according to claim 1, **characterized in that** a plurality of slots (33), grooves, recesses, passages and/or openings are introduced in the spring mantle (23).

3. Electrochemical test cell (10) according to claim 2, **characterized in that** the slots (33), grooves, recesses, passages and/or openings are arranged in one or more planes perpendicular to a longitudinal axis of the mantle (23).

4. Electrochemical test cell (10) according to claim 1, **characterized in that** at least one helically extending slot (33) is provided.

5. Electrochemical test cell (10) according to any of the preceding claims, **characterized in that** the test cell (10) has a force application device (27) for applying a defined and adjustable force to the test specimen (50).

6. Electrochemical test cell (10) according to claim 5, **characterized in that** a counterpart (31) interacting with the force application device (27) is arranged in the spring mantle (23), which counterpart is supported from the inside on the end wall (24) of the spring yoke (48), and/or **in that** a pressure piston (28) arranged between the force application device (27) and the test specimen (50) is guided axially displaceably in the spring mantle (23).

7. Electrochemical test cell (10) according to any of the preceding claims, **characterized in that** the spring mantle (23) is subjected to tensile stress in the assembled state of the test cell (10).

8. Electrochemical test cell (10) according to any of claims 1 to 7, **characterized in that** the spring mantle (23) is subjected to pressure in the assembled state of the test cell (10).

9. Electrochemical test cell (10) according to any of the preceding claims, **characterized in that** the spring yoke (48) has one or more connecting elements (25) at the end opposite the end wall (24) for interacting with corresponding connecting elements (26) on the base (11), preferably in the form of a bayonet fitting.

10. Electrochemical test cell (10) according to any of the preceding claims, **characterized in that** a through-opening (44) is provided in the end wall (24).

11. Electrochemical test cell (10) according to any of the preceding claims, **characterized in that** the spring mantle (23) is arranged inside the test chamber (51).

12. Electrochemical test cell (10) according to any of the preceding claims, **characterized in that** the spring mantle (23) is arranged outside the test chamber (51).

13. Electrochemical test cell (10) according to claim 13, **characterized in that** a bellows (42) is provided for sealing the test chamber (51).

14. Electrochemical test cell (10) according to any of the preceding claims, **characterized in that** the spring yoke (48) has a yoke part (52) that surrounds the spring mantle (23) on the outside.

15. Electrochemical test cell (10) according to any of the preceding claims, **characterized in that** the spring mantle (23) and the end wall (24) form a hat-shaped element (22).

## Revendications

1. Cellule de test électrochimique (10), comprenant :
- un socle (11) et un échantillon d'essai (50) maintenu par le socle (11) ;
- un ensemble couvercle (12) pouvant être fermé avec le socle (11) de manière étanche aux gaz et aux liquides, afin d'assurer l'étanchéité d'un espace d'essai (51) contenant l'échantillon d'essai (50) ;
- un étrier élastique (48) comportant une enveloppe élastique (23), qui est disposée dans la chaîne de force entre le socle (11) et l'échantillon d'essai (50) et agit sur l'échantillon d'essai (50), et une paroi frontale (24) ; et
- un capteur de force (38) destiné à mesurer la force agissant dans la chaîne de force ;
**caractérisée en ce qu'**au moins une fente (33), une rainure, un évidement, un perçage et/ou une ouverture est ménagé(e) dans l'enveloppe élastique (23) afin de produire une élasticité.

2. Cellule de test électrochimique (10) selon la revendication 1, **caractérisée en ce qu'**une pluralité de fentes (33), de rainures, d'évidements, de perçages et/ou d'ouvertures est ménagée dans l'enveloppe élastique (23).

3. Cellule de test électrochimique (10) selon la revendication 2, **caractérisée en ce que** les fentes (33), rainures, évidements, perçages et/ou ouvertures sont disposés dans un ou plusieurs plans perpendiculaires à un axe longitudinal de l'enveloppe (23).

4. Cellule de test électrochimique (10) selon la revendication 1, **caractérisée en ce qu'**au moins une fente (33) s'étendant en hélice est prévue.

5. Cellule de test électrochimique (10) selon l'une des revendications précédentes, **caractérisée en ce que** la cellule de test (10) présente un dispositif d'application de force (27) destiné à solliciter l'échantillon d'essai (50) avec une force définie et réglable.

6. Cellule de test électrochimique (10) selon la revendication 5, **caractérisée en ce qu'**une contre-pièce (31) coopérant avec le dispositif d'application de force (27) est disposée dans l'enveloppe élastique (23) et prend appui, depuis l'intérieur, contre la paroi frontale (24) de l'étrier élastique (48), et/ou **en ce qu'**un piston de pression (28), disposé entre le dispositif d'application de force (27) et l'échantillon d'essai (50), est guidé de manière axialement déplaçable dans l'enveloppe élastique (23).

7. Cellule de test électrochimique (10) selon l'une des revendications précédentes, **caractérisée en ce que** l'enveloppe élastique (23) est sollicitée en traction à l'état monté de la cellule de test (10).

8. Cellule de test électrochimique (10) selon l'une des revendications 1 à 7, **caractérisée en ce que** l'enveloppe élastique (23) est sollicitée en compression à l'état monté de la cellule de test (10).

9. Cellule de test électrochimique (10) selon l'une des revendications précédentes, **caractérisée en ce que** l'étrier élastique (48) présente, à l'extrémité opposée à la paroi frontale (24), un ou plusieurs éléments de liaison (25) destinés à coopérer avec des éléments de liaison correspondants (26) sur le socle (11), de préférence à la manière d'une fermeture à baïonnette.

10. Cellule de test électrochimique (10) selon l'une des revendications précédentes, **caractérisée en ce qu'**un perçage traversant (44) est prévu dans la paroi frontale (24).

11. Cellule de test électrochimique (10) selon l'une des revendications précédentes, **caractérisée en ce que** l'enveloppe élastique (23) est disposée à l'intérieur de l'espace d'essai (51).

12. Cellule de test électrochimique (10) selon l'une des revendications précédentes, **caractérisée en ce que** l'enveloppe élastique (23) est disposée à l'extérieur de l'espace d'essai (51).

13. Cellule de test électrochimique (10) selon la revendication 13, **caractérisée en ce qu'**un soufflet (42) est prévu pour assurer l'étanchéité de l'espace d'essai (51).

14. Cellule de test électrochimique (10) selon l'une des revendications précédentes, **caractérisée en ce que** l'étrier élastique (48) présente une partie d'étrier (52) entourant extérieurement l'enveloppe élastique (23).

15. Cellule de test électrochimique (10) selon l'une des revendications précédentes, **caractérisée en ce que** l'enveloppe élastique (23) et la paroi frontale (24) forment un élément en forme de chapeau (22).
